# EUROPEAN PATENT APPLICATION

(11) **EP 4 606 663 A1**
(43) Date of publication of application: **27.08.2025**
(21) Application number: 23879608.0
(22) Date of filing: 03.10.2023
(51) Int. Cl.: B60W 10/00, B60W 10/08, B60W 10/20, B60W 10/22, B60W 30/02, B60W 30/165, B60W 40/00, B60W 40/02, B60W 40/04, B60W 40/08, B60W 50/08, B60W 60/00, G08G 1/00, G08G 1/09, G08G 1/16

(54) **INFORMATION PROCESSING DEVICE, INFORMATION PROCESSING SYSTEM, AND PROGRAM**

(30) Priority: 20.10.2022 JP 2022168190; 30.11.2022 JP 2022192162; 30.11.2022 JP 2022192163; 30.11.2022 JP 2022192164; 02.12.2022 JP 2022193627
(71) Applicant: SoftBank Group Corp., Tokyo 105-7537 (JP)
(72) Inventor: SON, Masayoshi, Tokyo 105-7537 (JP)
(74) Representative: DREISS Patentanwälte PartG mbB
(86) International application number: PCT/JP2023/036091
(87) International publication number: WO 2024/084961

(57) **Abstract**

An information processing device includes: a calculation unit that calculates control variables for controlling a wheel speed and an inclination of each of four wheels of a vehicle and a suspension supporting the wheel based on sensor information including road information indicating a road condition of a road on which the vehicle is traveling; and a control unit that controls automated driving based on the control variables calculated by the calculation unit.

## Description

### Technical Field

The present disclosure relates to an information processing device, an information processing system, and a program.

### Background Art

Japanese Patent Application Laid-Open (JP-A) No. 2022-035198 describes a vehicle having an automated driving function.

### SUMMARY OF INVENTION

### Solution to Problem

According to an embodiment of the disclosure, an information processing device is provided. An information processing device of a first aspect includes: a calculation unit that calculates control variables for controlling a wheel speed and an inclination of each of four wheels of a vehicle and a suspension supporting the wheel based on sensor information including road information indicating a road condition of a road on which the vehicle is traveling; and a control unit that controls automated driving based on the control variables calculated by the calculation unit.

In an information processing device of a second aspect, in the information processing device of the first aspect, the control unit controls the automated driving every billionth of a second based on the control variables calculated by the calculation unit.

An information processing device of a third aspect is the information processing device of the first aspect or the second aspect, further including: a determination unit that determines, from among acquirable sensor information, control information to be used for calculating each of the control variables for controlling the wheel speed of each of the four wheels, the inclination of each of the four wheels, and the suspension supporting each of the four wheels, in which the calculation unit calculates the plurality of control variables for the control unit to control the automated driving based on the control information determined by the determination unit.

In an information processing device of a fourth aspect, in the information processing device of the third aspect, the determination unit updates information to be determined as the control information from among the sensor information based on a result of the control of the automated driving by the control unit.

In an information processing device of a fifth aspect, in the information processing device of any one of the first to fourth aspects, the calculation unit calculates the control variables based on preference information related to a riding sensation preference of an occupant riding in the vehicle and the sensor information.

In an information processing device of a sixth aspect, the information processing device of the fifth aspect further includes: an acquisition unit that acquires bodily sensation information related to a bodily sensation of the occupant, in which the calculation unit calculates the control variables based on the preference information analyzed from the acquired bodily sensation information.

In an information processing device of a seventh aspect, in the information processing device of the sixth aspect, the bodily sensation information is at least one of a voice, a line of sight, and biological information of the occupant.

In an information processing device of an eighth aspect, in the information processing device of any one of the first to seventh aspects, the calculation unit calculates the control variables for controlling a wheel speed and an inclination of each of four wheels of a host vehicle and a suspension supporting the wheel based on the sensor information including the road information indicating a road condition of a road on which the host vehicle is traveling, and other vehicle information about other vehicles that are traveling, and the control unit controls automated driving of the host vehicle based on the control variables calculated by the calculation unit.

In an information processing device of a ninth aspect, in the information processing device of the eighth aspect, the other vehicles are preceding vehicles traveling in front of the host vehicle on the road.

In an information processing device of a tenth aspect, the information processing device of the ninth aspect further includes: an update unit that updates a learning model for calculating the control variables of the host vehicle based on the other vehicle information.

In an information processing device of an eleventh aspect, in the information processing device of any one of the first to the tenth aspects, the information processing device is mounted on the vehicle, the information processing device further includes an acquisition unit that acquires first sensor information as the sensor information from a sensor mounted on the vehicle and second sensor information from other vehicles traveling around the vehicle, the calculation unit calculates the control variables based on the acquired first sensor information and second sensor information, and the control unit controls automated driving such that the vehicle travels in synchronization with the other vehicles based on the control variables calculated by the calculation unit.

In an information processing device of a twelfth aspect, in the information processing device of the eleventh aspect, the control unit transmits the calculated control variables to the other vehicles such that the other vehicles travel in synchronization with the vehicle.

In an information processing device of a thirteenth aspect, in the information processing device of the twelfth aspect, the calculation unit further calculates the control variables corresponding to each of the other vehicles, and the control unit transmits the corresponding control variables to each of the other vehicles to control automated driving of each of the other vehicles.

According to an embodiment of the disclosure, an information processing system is provided. An information processing system of a fourteenth aspect includes the vehicle on which the information processing device of any one of the eleventh to thirteenth aspects is mounted and the other vehicles, in which the vehicle transmits the control variables to the other vehicles, and the other vehicles control automated driving to travel in synchronization with the vehicle based on the control variables received from the vehicle.

According to an embodiment of the disclosure, there is provided a program of a fifteenth aspect for causing a computer to function as the information processing device of any one of the first to thirteenth aspects.

Note that the above summary of the disclosure does not enumerate all the necessary features of the disclosure. Further, the disclosure may also include subcombinations of these feature groups.

### BRIEF DESCRIPTION OF DRAWINGS

Fig. 1 is a diagram schematically illustrating the hazard prediction capabilities of AI in ultra-high performance automated driving according to a first embodiment.
Fig. 2 is a diagram schematically illustrating an example of a network configuration in a vehicle according to the first embodiment.
Fig. 3 is a flowchart executed by a central brain according to the first embodiment.
Fig. 4 is a first explanatory diagram for explaining an example of automated driving controlled by the central brain according to the first embodiment.
Fig. 5 is a second explanatory diagram for explaining an example of automated driving controlled by the central brain according to the first embodiment.
Fig. 6 is a third explanatory diagram for explaining an example of automated driving controlled by the central brain according to the first embodiment.
Fig. 7 is a fourth explanatory diagram for explaining an example of automated driving controlled by the central brain according to the first embodiment.
Fig. 8 is a fifth explanatory diagram for explaining an example of automated driving controlled by the central brain according to the first embodiment.
Fig. 9 is a diagram schematically illustrating an example of a hardware configuration of a computer that functions as a central brain.
Fig. 10 is a block diagram illustrating examples of functional components of a computer that functions as a central brain according to a second embodiment.
Fig. 11 is a flowchart executed by the central brain according to the second embodiment.
Fig. 12 is a block diagram illustrating examples of functional components of a central brain according to a third embodiment.
Fig. 13 is a flowchart executed by the central brain according to the third embodiment.
Fig. 14 is a diagram illustrating a schematic configuration of a control system according to a fourth embodiment.
Fig. 15 is a flowchart executed by the central brain according to the fourth embodiment.
Fig. 16 is a block diagram illustrating examples of functional components of a central brain according to a fifth embodiment.
Fig. 17 is a flowchart executed by the central brain according to the fifth embodiment.
Fig. 18 is a sequence diagram executed in cooperation by the central brain according to the fifth embodiment.

### DESCRIPTION OF EMBODIMENTS

Hereinafter, embodiments of the disclosure will be described, but the following embodiments do not limit the disclosure. In addition, not all combinations of features described in the embodiments are essential to the solution of the disclosure.

### (First Embodiment)

First, a first embodiment according to the present embodiment will be described.

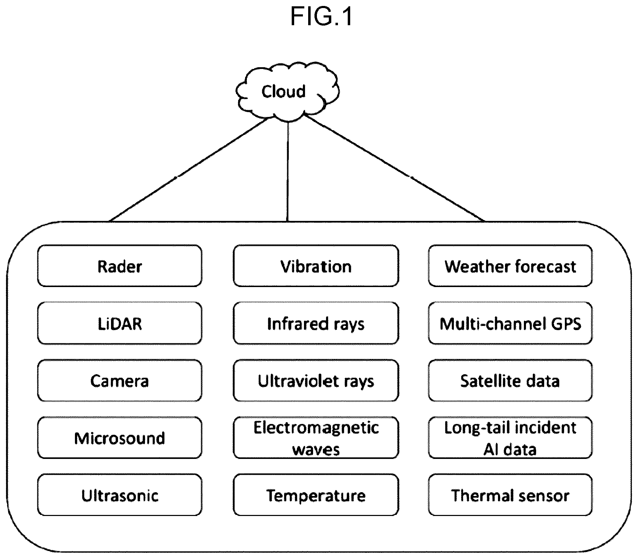

Fig. 1 schematically illustrates the hazard prediction capabilities of AI in ultra-high performance automated driving according to the present embodiment. In the present embodiment, a plurality of types of sensor information are converted into AI data and accumulated in the cloud. The AI predicts and determines the best mix of situations every nanosecond (every billionth of a second) to optimize an operation of a vehicle 12.

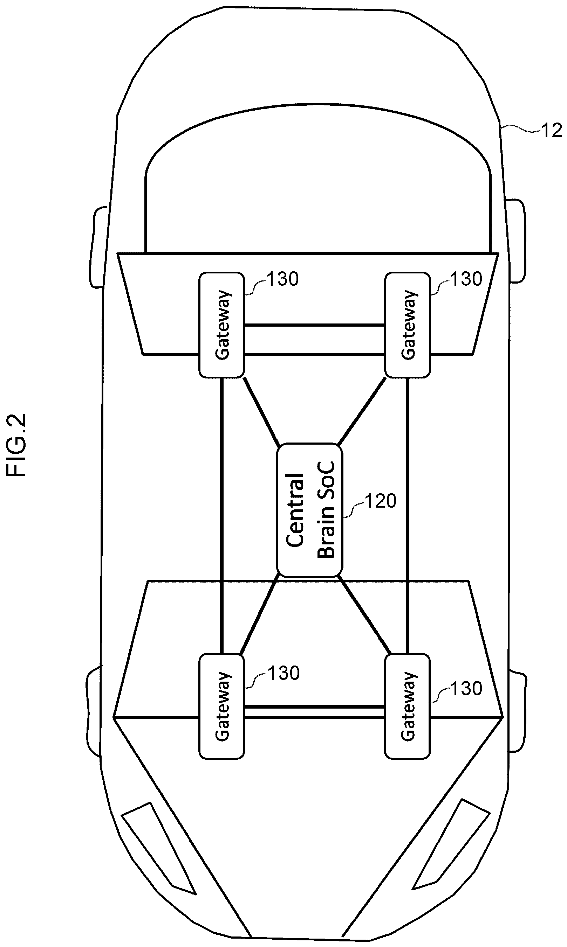

Fig. 2 is a diagram for explaining a configuration of a central brain 120 in the vehicle 12. The central brain 120 is an example of an information processing device.

As illustrated in Fig. 2, a plurality of gateways 130 are communicably connected to the central brain 120. The central brain 120 is connected to external clouds via the gateways 130. The central brain 120 is configured to be able to access the external clouds via the gateways 130. On the other hand, the central brain 120 cannot be directly accessed from the outside due to the presence of the gateways 130.

The central brain 120 outputs a request signal to a server every time a predetermined time elapses. Specifically, the central brain 120 outputs a request signal indicating an inquiry to the server every billionth of a second.

Examples of the sensors used in the present embodiment include radar, LiDAR, high-pixel, telephoto, ultra-wide angle, 360-degree, high-performance cameras, vision recognition, micro-sound, ultrasonic waves, vibration, infrared rays, ultraviolet rays, electromagnetic waves, temperature, humidity, spot AI weather forecasts, high-precision multi-channel GPS, low-altitude satellite information, long-tail incident AI data, and the like. The long-tail incident AI data is trip data from a level-5 vehicle.

Examples of the sensor information collected from the plurality of types of sensors include biological information such as a line of sight, a voice, a heart rate, and a body temperature of an occupant in the vehicle 12, a shift in the centroid of a body weight, detection of a material of a road, detection of an outside air temperature, detection of outside air humidity, detection of a vertical angle of a laterally oblique inclination of a slope, how a road freezes, detection of a moisture amount, detection of a material, a wear state, and an air pressure of each tire, a road width, whether overtaking is prohibited, vehicle type information of oncoming vehicles and preceding and following vehicles, cruising states of these vehicles, and surrounding circumstances (birds, animals, soccer balls, accident vehicles, earthquakes, fires, winds, typhoons, heavy rain, light rain, snowstorm, fog, and the like). In the present embodiment, these detections are performed every billionth of a second.

In the present embodiment, the central brain 120 functions as a calculation unit that calculates a wheel speed and an inclination of each of the four wheels of the vehicle 12 and a control variable for controlling a suspension supporting the wheel based on the sensor information detected by the above-described sensors and including road information indicating a road condition of a road on which the vehicle 12 is traveling (e.g. a material of the road, a vertical angle of a laterally oblique inclination of a slope, how the road freezes, and a moisture amount of the road). Note that the inclination of the wheel includes both an inclination of the wheel with respect to an axis horizontal to the road and an inclination of the wheel with respect to an axis vertical to the road. Specifically, the central brain 120 calculates a total of 16 control variables for controlling a wheel speed of each of the four wheels, an inclination of each of the four wheels with respect to an axis horizontal to the road, an inclination of each of the four wheels with respect to an axis vertical to the road, and a suspension supporting each of the four wheels. In the present embodiment, the above-described 16 control variables are calculated every billionth of a second. The wheel speed of each of the four wheels can also be referred to as "the number of spins (the speed of rotations) of an in-wheel motor mounted on each of the four wheels", and the inclination of each of the four wheels with respect to the axis horizontal to the road can also be referred to as "the horizontal angle of each of the four wheels". For example, when the vehicle is traveling on a mountain road, the control variables are numerical values for performing steering optimum for the mountain road, and when the vehicle is parked in a parking lot, the control variables are numerical values for traveling at an angle optimum for the parking lot.

Furthermore, in the present embodiment, the central brain 120 functions as a control unit that controls automated driving every billionth of a second based on the calculated control variables. Specifically, the central brain 120 controls the in-wheel motor mounted on each of the four wheels based on the above-described 16 control variables, thereby controlling a wheel speed and an inclination of each of the four wheels of the vehicle 12 and a suspension supporting each of the four wheels to perform automated driving.

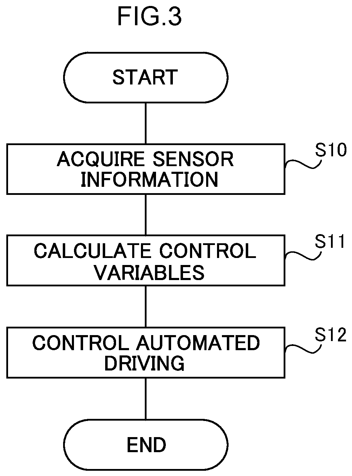

The central brain 120 repeatedly executes a flowchart illustrated in Fig. 3.

In step S10, the central brain 120 acquires sensor information including road information detected by the sensors. Then, the central brain 120 proceeds to step S11.

In step S11, the central brain 120 calculates the 16 control variables described above based on the sensor information acquired in step S10. Then, the central brain 120 proceeds to step S12.

In step S12, the central brain 120 controls automated driving based on the control variables calculated in step S11. Then, the central brain 120 ends the processing of the flowchart.

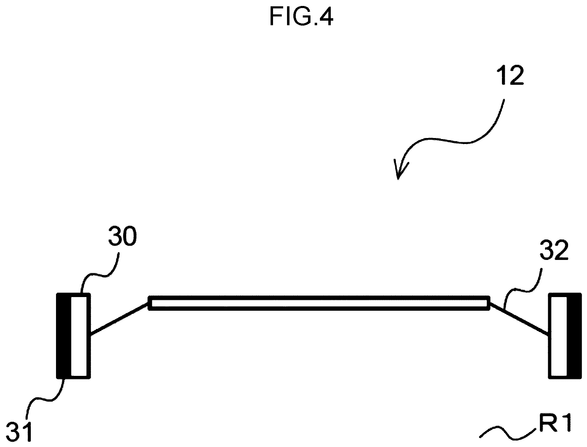

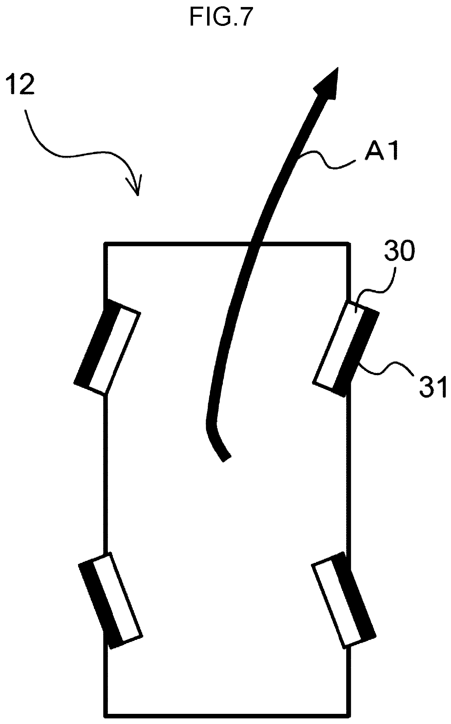

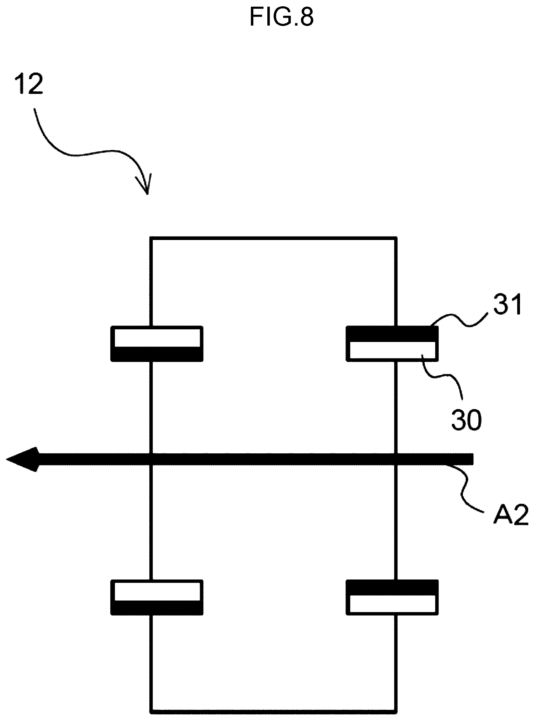

Figs. 4 to 8 are explanatory diagrams for explaining examples of automated driving controlled by the central brain 120. Note that Figs. 4 to 6 are explanatory diagrams illustrating the vehicle 12 as viewed from front, and Figs. 7 and 8 are explanatory views illustrating the vehicle 12 as viewed from below.

Fig. 4 illustrates a case in which the vehicle 12 is traveling on a flat road R1. The central brain 120 controls an in-wheel motor 31 mounted on each of four wheels 30 based on the above-described 16 control variables calculated for the road R1, thereby controlling a wheel speed and an inclination of each of the four wheels 30 and a suspension 32 supporting each of the four wheels 30 to perform automated driving.

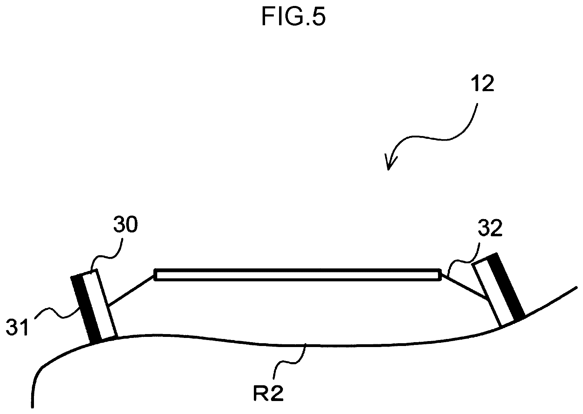

Fig. 5 illustrates a case in which the vehicle 12 is traveling on a mountain road R2. The central brain 120 controls the in-wheel motor 31 mounted on each of the four wheels 30 based on the above-described 16 control variables calculated for the mountain road R2, thereby controlling a wheel speed and an inclination of each of the four wheels 30 and a suspension 32 supporting each of the four wheels 30 to perform automated driving.

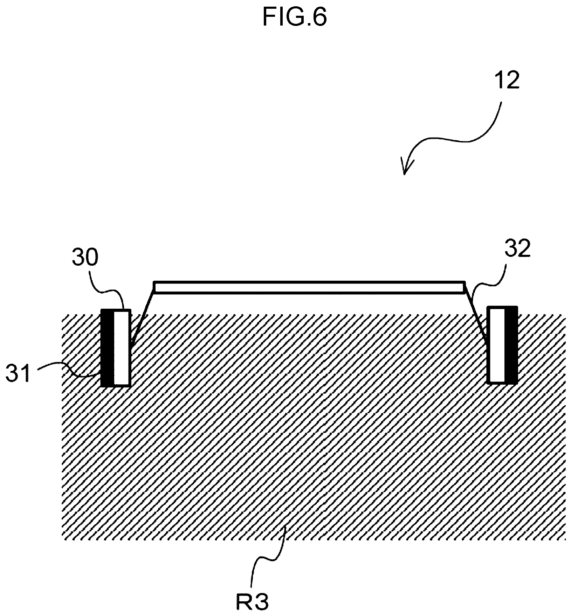

Fig. 6 illustrates a case in which the vehicle 12 is traveling in a puddle R3. The central brain 120 controls the in-wheel motor 31 mounted on each of the four wheels 30 based on the above-described 16 control variables calculated for the puddle R3, thereby controlling a wheel speed and an inclination of each of the four wheels 30 and a suspension 32 supporting each of the four wheels 30 to perform automated driving.

Fig. 7 illustrates a case in which the vehicle 12 curves in a direction indicated by arrow A1. The central brain 120 controls the in-wheel motor 31 mounted on each of the four wheels 30 based on the above-described 16 control variables calculated for the curved road that the vehicle has entered, thereby controlling a wheel speed and an inclination of each of the four wheels 30 and a suspension 32 (not illustrated) supporting each of the four wheels 30 to perform automated driving.

Fig. 8 illustrates a case in which the vehicle 12 moves parallel in a direction indicated by arrow A2. The central brain 120 controls the in-wheel motor 31 mounted on each of the four wheels 30 based on the above-described 16 control variables calculated for the parallel movement in the direction indicated by arrow A2, thereby controlling a wheel speed and an inclination of each of the four wheels 30 and a suspension 32 (not illustrated) supporting each of the four wheels 30 to perform automated driving.

Note that the states (inclinations) of the wheel 30 and the suspension 32 illustrated in Figs. 4 to 8 are merely examples, and it goes without saying that states of the wheel 30 and the suspension 32 different from the states illustrated in the respective drawings may occur.

Here, an in-wheel motor mounted on a conventional vehicle can independently control each drive wheel, but in the conventional vehicle, it is not possible to control the in-wheel motor by analyzing a road condition or the like. Therefore, for example, when the conventional vehicle is traveling on a mountain road, a puddle, or the like, appropriate automated driving based on the road condition or the like cannot be performed.

However, the vehicle 12 according to the present embodiment can perform automated driving in which the speed, steering, etc. are controlled in accordance with an environment such as a road condition based on the configuration described above.

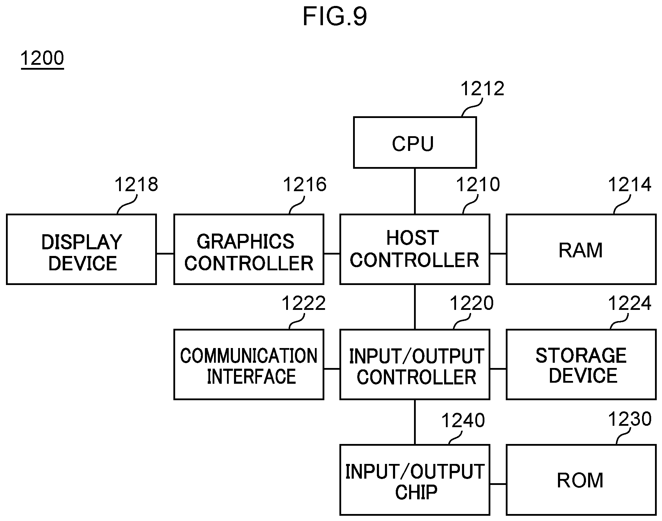

Fig. 9 schematically illustrates an example of a hardware configuration of a computer 1200 that functions as the central brain 120. Programs installed in the computer 1200 can cause the computer 1200 to function as one or more "units" of the device according to the present embodiment, or cause the computer 1200 to execute operations associated with the device according to the present embodiment or one or more "units" of the device according to the present embodiment, and/or cause the computer 1200 to execute a process according to the present embodiment or stages of the process. Such programs may be executed by a CPU 1212 to cause the computer 1200 to execute specific operations associated with some or all of the blocks in the flowcharts and block diagrams illustrated herein.

The computer 1200 according to the present embodiment includes a CPU 1212, a RAM 1214, and a graphics controller 1216, which are connected to each other by a host controller 1210. The computer 1200 also includes a communication interface 1222, a storage device 1224, and an input/output unit such as a DVD drive or an IC card drive, which are connected to the host controller 1210 via an input/output controller 1220. The DVD drive may be a DVD-ROM drive, a DVD-RAM drive, or the like. The storage device 1224 may be a hard disk drive, a solid state drive, or the like. The computer 1200 also includes a ROM 1230 and a legacy input/output unit such as a keyboard, which are connected to the input/output controller 1220 via an input/output chip 1240.

The CPU 1212 operates according to programs stored in the ROM 1230 and the RAM 1214, thereby controlling each unit. The graphics controller 1216 acquires image data generated by the CPU 1212 in a frame buffer or the like provided in the RAM 1214 or in the RAM 1214 itself, and causes the image data to be displayed on a display device 1218.

The communication interface 1222 communicates with other electronic devices via a network. The storage device 1224 stores programs and data used by the CPU 1212 in the computer 1200. The DVD drive reads programs or data from the DVD-ROM or the like and provides the programs or data to the storage device 1224. The IC card drive reads programs and data from the IC card and/or writes programs and data to the IC card.

The ROM 1230 stores therein a boot program or the like executed by the computer 1200 when activated, and/or programs dependent on the hardware of the computer 1200. The input/output chip 1240 may also connect various input/output units to the input/output controller 1220 via a USB port, a parallel port, a serial port, a keyboard port, a mouse port, and the like.

Programs are provided by a computer-readable storage medium such as a DVD-ROM or an IC card. The programs are read from the computer-readable storage medium, installed in the storage device 1224, the RAM 1214, or the ROM 1230, which is also an example of the computer-readable storage medium, and executed by the CPU 1212. The information processing described in these programs is read by the computer 1200 and brings about cooperation between the programs and the various types of hardware resources described above. The device or method may be configured by implementing the operation or processing of information according to the use of the computer 1200.

For example, when communication is performed between the computer 1200 and an external device, the CPU 1212 may execute a communication program loaded into the RAM 1214 and instruct the communication interface 1222 to perform communication processing based on the processing described in the communication program. Under the control of the CPU 1212, the communication interface 1222 reads transmission data stored in a transmission buffer area provided in the recording medium such as the RAM 1214, the storage device 1224, the DVD-ROM, or the IC card, and transmits the read transmission data to the network, or writes reception data received from the network to a reception buffer area or the like provided on the recording medium.

In addition, the RAM 1214 may read all or necessary portions of files or databases stored in the external recording medium such as the storage device 1224, the DVD drive (DVD-ROM), or the IC card, and the CPU 1212 may execute various types of processing on data on the RAM 1214. Next, the CPU 1212 may write back the processed data to the external recording medium.

Various types of information such as various types of programs, data, tables, and databases may be stored in the recording medium and subjected to information processing. The CPU 1212 may execute various types of processing on the data read from the RAM 1214, the various types of processing including various types of operations, information processing, conditional determination, conditional branching, unconditional branching, information search/replacement, and the like, which are described throughout the disclosure and specified by an instruction sequence of a program, and writes back the results to the RAM 1214. In addition, the CPU 1212 may search for information in files, databases, or the like in the recording medium. For example, in a case in which a plurality of entries, each having an attribute value of a first attribute associated with an attribute value of a second attribute, are stored in the recording medium, the CPU 1212 may search for an entry of which the attribute value of the first attribute matches the specified condition from among the plurality of entries, and read the attribute value of the second attribute stored in the entry, thereby acquiring the attribute value of the second attribute associated with the first attribute satisfying the predetermined condition.

The programs or software modules described above may be stored in the computer-readable storage medium on the computer 1200 or near the computer 1200. Furthermore, a recording medium such as a hard disk or a RAM provided in a server system connected to a dedicated communication network or the Internet can be used as a computer-readable storage medium, thereby providing a program to the computer 1200 via the network.

### (Second Embodiment)

Next, a second embodiment according to the present embodiment will be described while omitting or simplifying parts that overlap with those in the above-described embodiment.

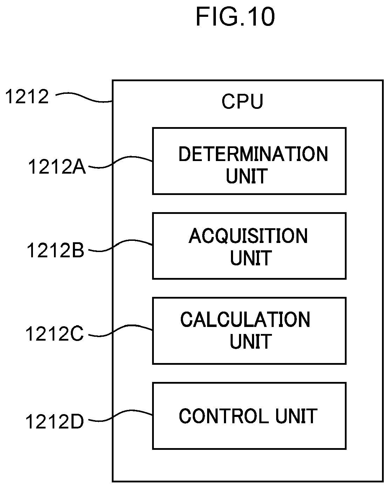

Fig. 10 is a block diagram illustrating examples of functional components of the computer 1200 that functions as the central brain 120.

As illustrated in Fig. 10, the CPU 1212 of the computer 1200 includes a determination unit 1212A, an acquisition unit 1212B, a calculation unit 1212C, and a control unit 1212D as functional components. The functional components are realized by the CPU 1212 reading and executing programs installed in the computer 1200.

The determination unit 1212A determines, from among acquirable sensor information, control information to be used for calculating a total of 16 control variables for controlling a wheel speed of each of the four wheels, an inclination of each of the four wheels with respect to an axis horizontal to the road, an inclination of each of the four wheels with respect to an axis vertical to the road, and a suspension supporting each of the four wheels. As an example, the determination unit 1212A acquires sensor information that can be detected by each sensor used by the vehicle 12 while the vehicle 12 is stopped, and determines control information to be used for calculating each control variable from among the sensor information.

The acquisition unit 1212B acquires sensor information detected by each of the sensors every billionth of a second during automated driving of the vehicle 12.

During the automated driving of the vehicle 12, the calculation unit 1212C calculates a plurality of control variables for the control unit 1212D to control the automated driving every billionth of a second based on the control information determined in advance by the determination unit 1212A among the sensor information acquired by the acquisition unit 1212B. Specifically, the calculation unit 1212C calculates a total of 16 control variables for controlling a wheel speed of each of the four wheels, an inclination of each of the four wheels with respect to an axis horizontal to the road, an inclination of each of the four wheels with respect to an axis vertical to the road, and a suspension supporting each of the four wheels.

The control unit 1212D controls the automated driving of the vehicle 12 every billionth of a second based on the control variables calculated by the calculation unit 1212C.

In addition, the determination unit 1212 updates information to be determined as the control information from among the sensor information during the automated driving of the vehicle 12 based on a result of the control of the automated driving by the control unit 1212D. For example, in a case in which a time longer than expected is required for parking in the parking lot as the result of the control of the automated driving, the determination unit 1212A updates the control information to be used for calculating control variables for controlling the automated driving related to the parking in the parking lot.

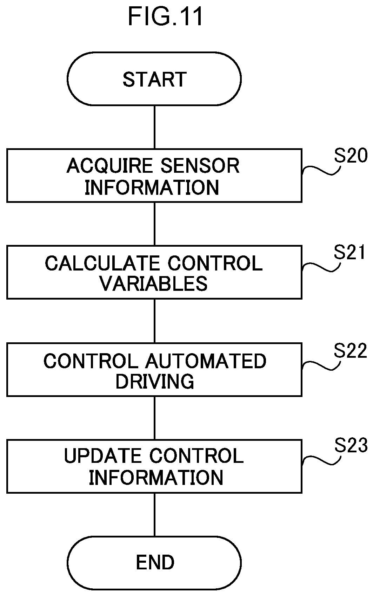

Next, a flow of processing executed by the computer 1200 functioning as the central brain 120 will be described. In the computer 1200, the CPU 1212 reads the programs installed in the computer 1200, develops the programs in the RAM 1214, and executes the programs, thereby executing processing of a flowchart illustrated in Fig. 11. As a premise of the processing, the CPU 1212 determines, from among acquirable sensor information, control information to be used for calculating a total of 16 control variables for controlling a wheel speed of each of the four wheels, an inclination of each of the four wheels with respect to an axis horizontal to the road, an inclination of each of the four wheels with respect to an axis vertical to the road, and a suspension supporting each of the four wheels.

In step S20, the CPU 1212 acquires sensor information including road information detected by the sensors. Then, the CPU 1212 proceeds to step S21.

In step S21, the CPU 1212 calculates the above-described 16 control variables based on the control information determined in advance among the sensor information acquired in step S20. Then, the CPU 1212 proceeds to step S22.

In step S22, the CPU 1212 controls automated driving based on the control variables calculated in step S21. Then, the CPU 1212 proceeds to step S23.

In step S23, the CPU 1212 updates information to be determined as the control information from among the sensor information based on a result of the control of the automated driving performed in step S22. Then, the CPU 1212 ends the processing of the flowchart.

As described above, in the computer 1200 functioning as the central brain 120 according to the second embodiment, the CPU 1212 determines, from among acquirable sensor information, control information to be used for calculating a total of 16 control variables for controlling a wheel speed of each of the four wheels, an inclination of each of the four wheels with respect to an axis horizontal to the road, an inclination of each of the four wheels with respect to an axis vertical to the road, and a suspension supporting each of the four wheels. Then, the CPU 1212 calculates the above-described 16 control variables for controlling automated driving based on the control information determined while the vehicle 12 is stopped. As a result, in the computer 1200, the processing load of the CPU 1212 can be reduced during the automated driving as compared with that in a case in which the information to be used for calculating each of the plurality of control variables is determined during the automated driving.

In the computer 1200, the CPU 1212 updates information to be determined as the control information from among the sensor information based on a result of the control of the automated driving. As a result, the computer 1200 can optimize the information used for calculating each of the plurality of control variables during the automated driving.

### (Third Embodiment)

Next, a third embodiment according to the present embodiment will be described while omitting or simplifying parts that overlap with those in the above-described embodiments.

In the third embodiment, the central brain 120 acquires in addition to preference information related to riding sensation preferences of an occupant riding in the vehicle 12, which is set in advance by the occupant, sensor information including bodily sensation information sensed by the occupant riding in the vehicle 12 (e.g., biological information such as a line of sight, a voice, a heart rate, and a body temperature of the occupant) and road information indicating a road condition of a road on which the vehicle 12 is traveling (e.g. a material of the road, a vertical angle of a laterally oblique inclination of a slope, how the road freezes, and a moisture amount of the road). The central brain 120 functions as a calculation unit that calculates control variables for controlling a wheel speed and an inclination of each of the four wheels of the vehicle 12 and a suspension supporting the wheel based on the preference information and the sensor information including the road information and the bodily sensation information.

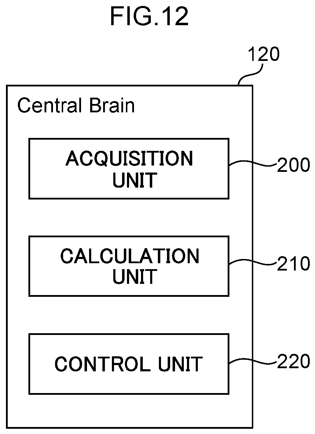

Fig. 12 is a block diagram for explaining functional components of the central brain 120. As illustrated in Fig. 12 as an example, the central brain 120 functions as an acquisition unit 200, a calculation unit 210, and a control unit 220 by executing an information processing program.

The acquisition unit 200 acquires preference information and sensor information including road information and bodily sensation information. For example, the acquisition unit 200 acquires, as the preference information, riding sensation preferences of the occupant set in advance by the occupant, such as whether to allow traveling on an inclined surface, whether to allow traveling in a puddle, and whether to allow traveling by parallel movement. In addition, the acquisition unit 200 acquires road information detected by sensors mounted on the vehicle 12, such as a material of the road, a vertical angle of a laterally oblique inclination of a slope, how the road freezes, and a moisture amount of the road. In addition, the acquisition unit 200 acquires biological information such as a line of sight, a voice, a heart rate, and a body temperature of the occupant as the bodily sensation information.

Using the acquired road information, preference information, and bodily sensation information, the calculation unit 210 calculates control variables for controlling a wheel speed and an inclination of each of the four wheels of the vehicle 12 and a suspension supporting the wheel For example, the calculation unit 210 calculates control variables for performing control so that the occupant has a preferred riding sensation in accordance with the preference information including traveling on an inclined surface, whether to allow traveling in a puddle, whether to allow traveling by parallel movement, and the like, and road information.

In addition, the calculation unit 210 calculate preference information indicating preferences of the occupant by analyzing the bodily sensation information, and calculates control variables using the calculated preference information and the road information. For example, in a case in which the heart rate and the body temperature of the occupant included in the bodily sensation information increase, the calculation unit 210 determines that the current traveling is not a preference of the occupant, and calculates control variables for performing control such that the front-rear direction of the vehicle 12 is directed toward the traveling direction and the wheel speed of the vehicle 12 is reduced.

In addition, the calculation unit 210 calculates preference information according to the line of sight of the occupant included in the bodily sensation information, and calculates control variables. For example, in a case in which the line of sight of the occupant is directed leftward by 90 degrees with respect to the traveling direction, the calculation unit 210 calculates control variables for performing control such that the front-rear direction of the vehicle 12 is rotated leftward by 90 degrees with respect to the traveling direction, and the vehicle 12 continues traveling in the traveling direction (e.g., crab-running).

Furthermore, the calculation unit 210 calculates preference information according to the voice and the line of sight of the occupant included in the bodily sensation information, and calculates control variables. For example, the calculation unit 210 analyzes a voice of the occupant saying "I want to take a closer look" included in the bodily sensation information, and extracts a feature "I want to watch". According to the extracted feature, the calculation unit 210 calculates control variables for reducing the wheel speed of the vehicle 12 and controlling the suspension so that the vehicle body of the vehicle 12 tilts in a direction toward the line of sight of the occupant.

The control unit 220 controls the automated driving of the vehicle 12 based on the control variables calculated by the calculation unit 210.

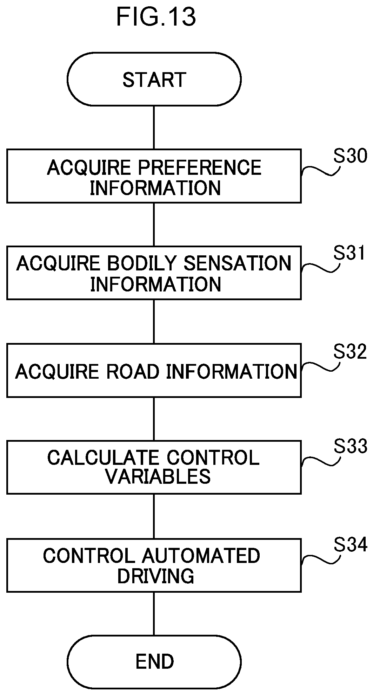

The central brain 120 repeatedly executes a flowchart illustrated in Fig. 13.

In step S30, the central brain 120 acquires preference information set by the occupant. Then, the central brain 120 proceeds to step S31.

In step S31, the central brain 120 acquires bodily sensation information detected by the sensors. Then, the central brain 120 proceeds to step S32.

In step S32, the central brain 120 acquires sensor information including road information detected by the sensors. Then, the central brain 120 proceeds to step S33.

In step S33, the central brain 120 calculates the above-described 16 control variables based on the acquired preference information, bodily sensation information, and sensor information. Then, the central brain 120 proceeds to step S34.

In step S34, the central brain 120 controls automated driving based on the control variables calculated in step S33. Then, the central brain 120 ends the processing of the flowchart.

### (Fourth Embodiment)

Next, a fourth embodiment according to the present embodiment will be described while omitting or simplifying parts that overlap with those in the above-described embodiments.

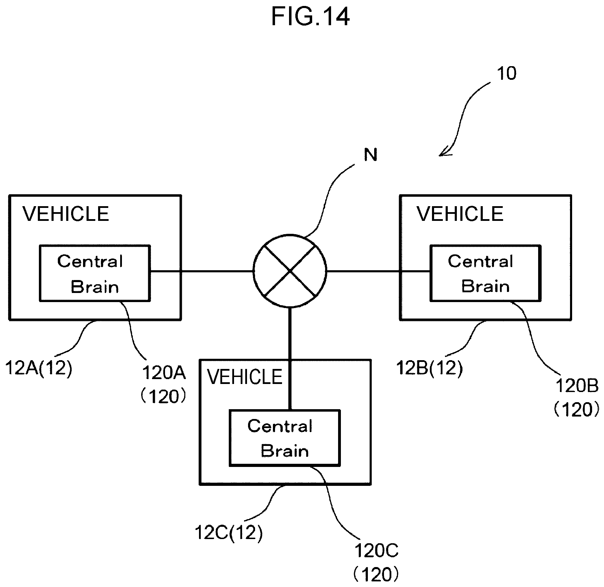

Fig. 14 is a diagram illustrating a schematic configuration of a control system 10 according to the fourth embodiment.

As illustrated in Fig. 14, the control system 10 includes a plurality of vehicles 12A, 12B, and 12C. Note that the number of vehicles 12 in the control system 10 is not limited to three, and may be larger or smaller than three.

The vehicles 12A, 12B, and 12C are equipped with central brains 120A, 120B, and 120C, respectively. The central brains 120A, 120B, and 120C are communicably connected to each other via a network N. Then, the central brains 120A, 120B, and 120C transmit sensor information detected by the sensors used by the vehicles 12A, 12B, and 12C every billionth of a second.

In the fourth embodiment, based on sensor information including road information indicating a road condition of a road on which a host vehicle (e.g., the vehicle 12A) is traveling and other vehicle information related to other vehicles (e.g., the vehicle 12B and the vehicle 12C) that are traveling, the central brain 120 functions as a calculation unit that calculates the above-described 16 control variables (control variables for controlling a wheel speed of each of the four wheels, an inclination of each of the four wheels with respect to an axis horizontal to the road, an inclination of each of the four wheels with respect to an axis vertical to the road, and a suspension supporting each of the four wheels) of the host vehicle. The above-described other vehicles are preceding vehicles traveling in front of the host vehicle on the road. The above-described other vehicle information is, for example, sensor information detected by sensors used in the other vehicles.

Furthermore, in the fourth embodiment, a learning model for calculating each of the above-described 16 control variables is stored in the storage device 1224 of the computer 1200 functioning as the central brain 120. The learning model is a machine learning model that outputs control variables when the sensor information of the host vehicle and the other vehicle information are input thereto. Then, the central brain 120 calculate the above-described 16 control variables when the sensor information of the host vehicle and the other vehicle information acquired every billionth of a second is input to the learning model. That is, it can be said that the central brain 120 is configured by artificial intelligence (AI) capable of calculating control variables from sensor information of the host vehicle and other vehicle information using machine learning, more specifically, deep learning.

In the fourth embodiment, the central brain 120 also functions as an update unit that updates the learning model for calculating control variables for the host vehicle based on the acquired other vehicle information. Note that the data used to update the learning model is not limited to the other vehicle information, and other information such as sensor information of the host vehicle may be used.

Then, in the fourth embodiment, the central brain 120 functions as a control unit that controls the automated driving of the host vehicle based on the above-described 16 control variables.

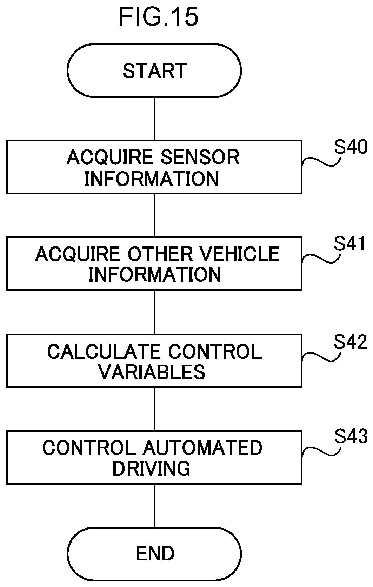

Next, a flow of processing executed by the central brain 120 will be described. In the computer 1200 functioning as the central brain 120, the CPU 1212 reads the programs installed in the computer 1200, develops the programs in the RAM 1214, and executes the programs, thereby executing processing of a flowchart illustrated in Fig. 15.

In step S40, the central brain 120 acquires sensor information including road information detected by the sensors of the host vehicle. Then, the central brain 120 proceeds to step S41.

In step S41, the central brain 120 acquires other vehicle information. Then, the central brain 120 proceeds to step S42.

In step S42, the central brain 120 calculates the above-described 16 control variables based on the sensor information acquired in step S40 and the other vehicle information acquired in step S41. Then, the central brain 120 proceeds to step S43.

In step S43, the central brain 120 controls automated driving based on the control variables calculated in step S42. Then, the central brain 120 ends the processing of the flowchart. Although not illustrated in Fig. 15, in the processing of the flowchart, processing of updating the learning model for calculating control variables of the host vehicle may be performed based on the other vehicle information acquired in step S41.

As described above, the central brain 120 according to the fourth embodiment calculates the above-described 16 control variables of the host vehicle based on the sensor information of the host vehicle and the other vehicle information. Then, the central brain 120 controls the automated driving of the host vehicle based on the calculated 16 control variables described above. As a result, according to the central brain 120, since the automated driving of the host vehicle can be controlled based on the information about the host vehicle and the information about other vehicles, improvement in accuracy of automated driving can be expected as compared with that in a case in which the automated driving of the host vehicle is controlled only based on the information about the host vehicle.

In the fourth embodiment, the other vehicles are preceding vehicles traveling ahead of the host vehicle on the road. Then, the central brain 120 according to the fourth embodiment updates a learning model for calculating control variables for the host vehicle based on the other vehicle information. As a result, according to the central brain 120, since the learning model for calculating control variables for the host vehicle can be updated based on actual measurement data when the preceding vehicles are traveling on the road, it is possible to expect improvement in accuracy of automated driving when the host vehicle travels on the road on which the preceding vehicles have traveled.

### (Fifth Embodiment)

Next, a fifth embodiment according to the present embodiment will be described while omitting or simplifying parts that overlap with those in the above-described embodiments.

Furthermore, in the fifth embodiment, the central brain 120 acquires sensor information detected by other vehicles traveling around the vehicle 12 from the other vehicles, and calculates control variables based on the sensor information from the vehicle 12 and the other vehicles. In the following description, when the vehicle 12 is to be distinguished from the other vehicles, they will be referred to as "vehicle 12" and "other vehicles 14" for distinction. Similarly, when the central brains mounted on the vehicle 12 and the other vehicles 14 are to be distinguished from each other, they will be referred to as "central brain 120" in the vehicle 12 and "central brain 120A" in each of the other vehicles 14 for distinction.

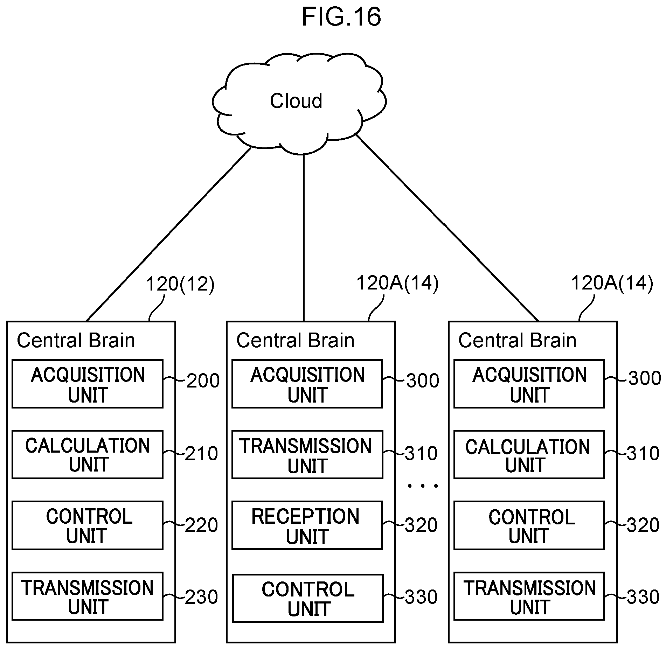

Fig. 16 is a block diagram for explaining functional components of the central brain 120 and the central brain 120A.

As illustrated in Fig. 16 as an example, the central brain 120 of the vehicle 12 functions as an acquisition unit 200, a calculation unit 210, a control unit 220, and a transmission unit 230. In addition, the central brain 120A of the other vehicle 14 functions as an acquisition unit 300, a transmission unit 310, a reception unit 320, and a control unit 330.

The acquisition unit 200 in the vehicle 12 acquires sensor information from sensors mounted on the vehicle 12, and acquires sensor information transmitted from the other vehicle 14.

Using the sensor information acquired from the vehicle 12 and the other vehicle 14, the calculation unit 210 calculates control variables for controlling a wheel speed and an inclination of each of the four wheels of the vehicle 12 and a suspension supporting the wheel. For example, when the other vehicle 14 is traveling in front of the vehicle 12 in the traveling direction, the calculation unit 210 detects sensor information including road information, and calculates control variables for controlling a wheel speed and an inclination of each of the four wheels of the vehicle 12 and a suspension supporting the wheel so as to travel following the other vehicle 14. Here, for example, using the sensor information acquired from the other vehicle 14, the calculation unit 210 calculates control variables in consideration of the influence of the condition of the road on which the other vehicle 14 is traveling.

In addition, when the other vehicle 14 is traveling in parallel on the right side of the vehicle 12, the calculation unit 210 detects a situation of the other vehicle 14, calculates control variables to travel in accordance with the movement of the other vehicle 14, and performs automated driving of the vehicle 12. For example, when the other vehicle 14 travels to approach the vehicle 12, the calculation unit 210 calculates the control variables according to the condition of the road such that the vehicle 12 moves to the opposite side of the position of the other vehicle by the same distance as the distance by which the other vehicle has approached the vehicle 12. That is, the calculation unit 210 calculates control variables according to the movement of the other vehicle 14 traveling around the vehicle 12, and performs the automated driving of the vehicle 12 to maintain a constant interval with the another vehicle 14.

The control unit 220 controls the automated driving of the vehicle 12 based on the control variables calculated by the calculation unit 210.

The transmission unit 230 transmits the calculated control variables to the other vehicle 14.

The acquisition unit 300 in the other vehicle 14 acquires sensor information from sensors mounted on the other vehicle 14.

The transmission unit 310 transmits the acquired sensor information to the vehicle 12.

The reception unit 320 receives the control variables transmitted from the vehicle 12.

The control unit 330 controls the automated driving of the other vehicle 14 based on the control variables received from the vehicle 12.

That is, in the above description, the vehicle 12 and the other vehicles 14 perform automated driving based on the control variables calculated by the vehicle 12. For example, when a plurality of vehicles 12 are traveling in a vertical line, a vehicle 12 among the plurality of vehicles 12 transmits control variables calculated from sensor information acquired from the vehicle 12 and the other vehicles 14 to the other vehicles 14 other than the vehicle 12, and the vehicle 12 and the other vehicles 14 perform automated driving based on the control variables. As the other vehicles 14 perform automated driving based on the control variables calculated by the vehicle 12, the automated driving is performed so that the vehicle 12 and the other vehicles 14 move in synchronization with each other.

In the fifth embodiment, a mode has been described in which the vehicle 12 and the other vehicle 14 perform automated driving based on the same control variables calculated by the vehicle 12. However, the automated driving of the vehicle 12 and the other vehicles 14 is not limited thereto. The vehicle 12 may calculate a control variable corresponding to each of the other vehicles 14, and the vehicle 12 and the another vehicle 14 may perform automated driving based on the corresponding control variable.

For example, the vehicle 12 acquires sensor information from each of the other vehicles 14, and calculates control variables for the vehicle 12 and each of the other vehicles 14 using the acquired sensor information. The vehicle 12 transmits the calculated control variables to the corresponding other vehicles 14, and the vehicle 12 and the other vehicles 14 perform automated driving based on the respectively different control variables.

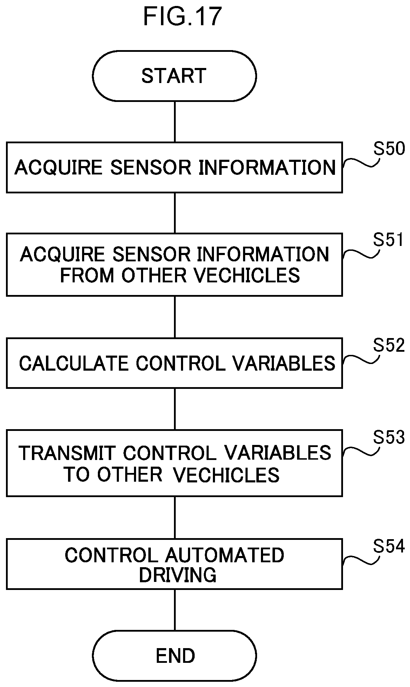

The central brain 120 repeatedly executes a flowchart illustrated in Fig. 17.

In step S50, the central brain 120 acquires sensor information including road information detected by the sensors. Then, the central brain 120 proceeds to step S51.

In step S51, the central brain 120 acquires sensor information including road information detected by the other vehicles 14. Then, the central brain 120 proceeds to step S52.

In step S52, the central brain 120 calculates the above-described 16 control variables based on the sensor information of the vehicle 12 and the other vehicles 14 acquired in steps S50 and S51. Then, the central brain 120 proceeds to step S53.

In step S53, the central brain 120 transmits the control variables calculated in step S52 to the other vehicles 14. Then, the central brain 120 proceeds to step S54.

In step S54, the central brain 120 controls automated driving based on the control variables calculated in step S52. Then, the central brain 120 ends the processing of the flowchart.

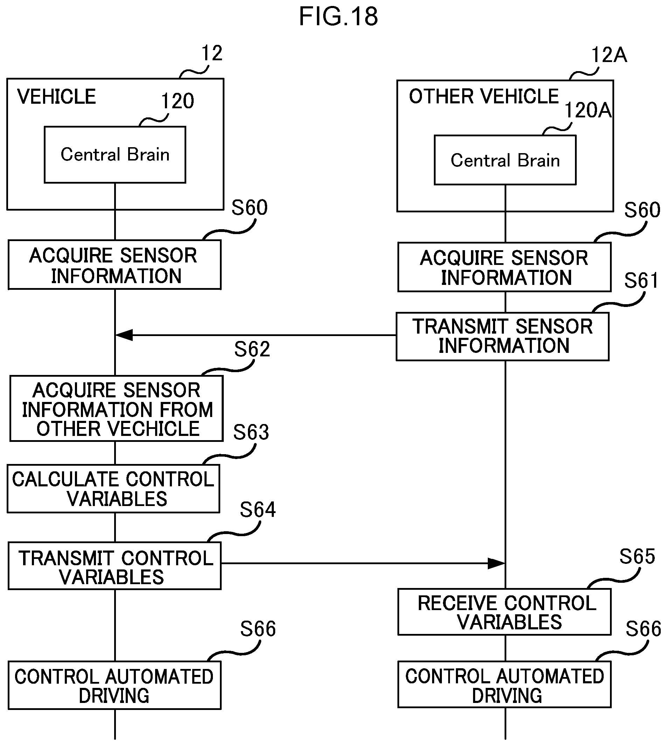

The central brain 120 in the vehicle 12 and the central brain 120A in each of the other vehicles 14 cooperatively and repeatedly execute processing in a sequence diagram illustrated in Fig. 18.

In step S60, the central brain 120 and the central brain 120A acquire sensor information including road information detected by the sensors.

In step S61, the central brain 120A transmits the sensor information to the vehicle 12.

In step S62, the central brain 120 acquires sensor information from the other vehicle 14.

In step S63, the central brain 120 acquires control variables using the acquired sensor information.

In step S64, the central brain 120 transmits the calculated control variables to the other vehicle 14.

In step S65, the central brain 120A receives the control variables transmitted from the vehicle 12.

In step S66, the central brain 120 and the central brain 120A control automated driving using the control variables. Then, the central brain 120 and the central brain 120A end the processing of the sequence diagram.

While the disclosure has been described using the embodiments, the technical scope of the disclosure is not limited to the above-described embodiments. It is apparent to those skilled in the art that various modifications or improvements can be made to the above-described embodiments. It is also apparent from the claims that modes to which such modifications or improvements are added can also fall within the technical scope of the disclosure.

The blocks in the flowcharts and block diagrams in the present embodiment may represent stages of a process in which operations are performed or "units" of a device that serves to perform operations. Specific stages and "units" may be implemented by dedicated circuits, programmable circuits provided with computer-readable instructions stored on the computer-readable storage medium, and/or processors provided with computer-readable instructions stored on the computer-readable storage medium. The dedicated circuits may include digital and/or analog hardware circuits, and may include integrated circuits (ICs) and/or discrete circuits. The programmable circuits may include reconfigurable hardware circuits including a logical AND, a logical OR, a logical XOR, a logical NAND, a logical NOR, and other logical operations, flip-flops, registers, and memory elements, such as field programmable gate arrays (FPGAs) and programmable logic arrays (PLAs).

The computer-readable storage medium may include any type of tangible device capable of storing instructions to be executed by a suitable device. As a result, the computer-readable storage medium having instructions stored thereon includes a product having instructions that may be executed to create a means for performing the operations specified in the flowcharts or block diagrams. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-ray (registered trademark) disk, a memory stick, an integrated circuit card, and the like.

The computer-readable instructions may include assembler instructions, instruction-set-architecture (ISA) instructions, machine instructions, machine dependent instructions, microcode, firmware instructions, state-setting data, or either source code or object code written in any combination of one or more programming languages including object-oriented programming languages such as Smalltalk (registered trademark), JAVA (registered trademark), and C++, and conventional procedural programming languages such as a "C" programming language or similar programming languages.

The computer-readable instructions may be provided for a processor or a programmable circuit of a general purpose computer, a special purpose computer, or another programmable data processing device, either locally or through a local area network (LAN) or a wide area network (WAN) such as the Internet, such that the processor or programmable circuit of the general purpose computer, the special purpose computer, or another programmable data processing device executes the computer-readable instructions to create a means for performing the operations specified in the flowcharts or block diagrams. Examples of the processor include a computer processor, a processing unit, a microprocessor, a digital signal processor, a controller, a microcontroller, and the like.

It should be noted that the operations, procedures, steps, and stages in each process performed in the device, system, program, and method shown in the claims, the specification, and the drawings may be implemented in any order unless the order is not specifically defined by using term "prior to", "before", or the like, and unless the output of previous processing is used in later processing. Even if the operation flow in the claims, the specification, and the drawings is described using the terms "first,", "next,", and the like for convenience, this does not mean that it is essential to perform the operation flow in this order.

While the disclosure has been described using the embodiments, the technical scope of the disclosure is not limited to the above-described embodiments. It is apparent to those skilled in the art that various modifications or improvements can be made to the above-described embodiments. It is also apparent from the claims that modes to which such modifications or improvements are added can also fall within the technical scope of the disclosure.

It should be noted that the operations, procedures, steps, and stages in each process performed in the device, system, program, and method shown in the claims, the specification, and the drawings may be implemented in any order unless the order is not specifically defined by using term "prior to", "before", or the like, and unless the output of previous processing is used in later processing. Even if the operation flow in the claims, the specification, and the drawings is described using the terms "first,", "next,", and the like for convenience, this does not mean that it is essential to perform the operation flow in this order.

The disclosure of Japanese Patent Application No. 2022-168190 filed on October 20, 2022, the disclosure of Japanese Patent Application No. 2022-192162 filed on November 30, 2022, the disclosure of Japanese Patent Application No. 2022-192163 filed on November 30, 2022, the disclosure of Japanese Patent Application No. 2022-193627 filed on December 2, 2022, and the disclosure of Japanese Patent Application No. 2022-192164 filed on November 30, 2022 are incorporated herein by reference in their entirety.

All the documents, patent applications, and technical standards described in this specification are incorporated herein by reference to the same extent as if each document, patent application, and technical standard were specifically and individually indicated to be incorporated by reference.

## Claims

1. An information processing device comprising:
a calculation unit that calculates control variables for controlling a wheel speed and an inclination of each of four wheels of a vehicle and a suspension supporting the wheel based on sensor information including road information indicating a road condition of a road on which the vehicle is traveling; and
a control unit that controls automated driving based on the control variables calculated by the calculation unit.

2. The information processing device according to claim 1, wherein
the control unit controls the automated driving every billionth of a second based on the control variables calculated by the calculation unit.

3. The information processing device according to claim 1, further comprising:
a determination unit that determines, from among acquirable sensor information, control information to be used for calculating each of the control variables for controlling the wheel speed of each of the four wheels, the inclination of each of the four wheels, and the suspension supporting each of the four wheels,
wherein the calculation unit calculates the plurality of control variables for the control unit to control the automated driving based on the control information determined by the determination unit.

4. The information processing device according to claim 3, wherein
the determination unit updates information to be determined as the control information from among the sensor information based on a result of the control of the automated driving by the control unit.

5. The information processing device according to claim 1, wherein
the calculation unit calculates the control variables based on preference information related to a riding sensation preference of an occupant riding in the vehicle and the sensor information.

6. The information processing device according to claim 5, further comprising:
an acquisition unit that acquires bodily sensation information related to a bodily sensation of the occupant,
wherein the calculation unit calculates the control variables based on the preference information analyzed from the acquired bodily sensation information.

7. The information processing device according to claim 6, wherein
the bodily sensation information is at least one of a voice, a line of sight, and biological information of the occupant.

8. The information processing device according to claim 1, wherein
the calculation unit calculates the control variables for controlling a wheel speed and an inclination of each of four wheels of a host vehicle and a suspension supporting the wheel based on the sensor information including the road information indicating a road condition of a road on which the host vehicle is traveling, and other vehicle information about other vehicles that are traveling, and
the control unit controls automated driving of the host vehicle based on the control variables calculated by the calculation unit.

9. The information processing device according to claim 8, wherein
the other vehicles are preceding vehicles traveling in front of the host vehicle on the road.

10. The information processing device according to claim 9, further comprising:
an update unit that updates a learning model for calculating the control variables of the host vehicle based on the other vehicle information.

11. The information processing device according to claim 1, wherein
the information processing device is mounted on the vehicle,
the information processing device further comprises an acquisition unit that acquires first sensor information as the sensor information from a sensor mounted on the vehicle and second sensor information from other vehicles traveling around the vehicle,
the calculation unit calculates the control variables based on the acquired first sensor information and second sensor information, and
the control unit controls automated driving such that the vehicle travels in synchronization with the other vehicles based on the control variables calculated by the calculation unit.

12. The information processing device according to claim 11, wherein
the control unit transmits the calculated control variables to the other vehicles such that the other vehicles travel in synchronization with the vehicle.

13. The information processing device according to claim 12, wherein
the calculation unit further calculates the control variables corresponding to each of the other vehicles, and
the control unit transmits the corresponding control variables to each of the other vehicles to control automated driving of each of the other vehicles.

14. An information processing system comprising: the vehicle on which the information processing device according to any one of claims 11 to 13 is mounted; and the other vehicles,
wherein the vehicle transmits the control variables to the other vehicles, and
the other vehicles control automated driving to travel in synchronization with the vehicle based on the control variables received from the vehicle.

15. A program for causing a computer to function as the information processing device according to any one of claims 1 to 13.
